# EUROPÄISCHE PATENTSCHRIFT

(11) **EP 1 930 368 B1**
(45) Veröffentlichungstag und Bekanntmachung des Hinweises auf die Patenterteilung: **21.03.2012**
(21) Anmeldenummer: 07122501.5
(22) Anmeldetag: 06.12.2007
(51) Int. Cl.: C08J 9/00, C08L 25/04

(54) **Verfahren zur Herstellung von Schaumstoffen mit vergrösserten Zellen**
Process for making foams with enlarged cells
Procédé de préparation de mousses comprenant des cellules agrandies

(30) Priorität: 08.12.2006 EP 06125680
(43) Veröffentlichungstag der Anmeldung: 11.06.2008
(73) Patentinhaber: BASF SE, 67056 Ludwigshafen (DE)
(72) Erfinder: Schips, Carsten, 67342, Speyer (DE); Hahn, Klaus, 67281, Kirchheim (DE); Merkel, Peter, 67308, Zellertal (DE); Turznik, Gerhard, 67269, Grünstadt (DE)

(56) Entgegenhaltungen:
- EP-A- 0 427 533
- EP-A- 1 308 475
- EP-A- 1 661 939
- WO-A-94/16876
- US-A- 4 229 396
- US-A- 4 345 041
- US-A- 4 359 538
- US-A- 4 395 510
- US-A- 4 640 933
- US-A- 5 389 694
- US-A- 5 776 389
- DATABASE WPI Week 199309 Derwent Publications Ltd., London, GB; AN 1993-071216 XP002467870 & JP 05 017611 A (SEKISUI CHEM IND CO LTD) 26. Januar 1993 (1993-01-26)
- DATABASE WPI Week 200432 Derwent Publications Ltd., London, GB; AN 2004-342789 XP002467871 & JP 2004 051875 A (ASAHI KASEI KK) 19. Februar 2004 (2004-02-19)
- DATABASE WPI Week 199510 Derwent Publications Ltd., London, GB; AN 1995-070401 XP002467872 & JP 06 345889 A (SEKISUI CHEM IND CO LTD) 20. Dezember 1994 (1994-12-20)
- DATABASE WPI Week 200481 Derwent Publications Ltd., London, GB; AN 2004-816019 XP002467873 & JP 2004 292489 A (SEKISUI PLASTICS CO LTD) 21. Oktober 2004 (2004-10-21)

## Beschreibung

Die vorliegende Erfindung betrifft ein Verfahren zur Herstellung von Schaumstoffen aus wenigstens einem polymeren Material.

Verfahren zur Herstellung von Schaumstoffen, welche Polymere auf Basis von aromatischen Verbindungen enthalten, sind aus dem Stand der Technik bekannt.

EP 1 661 939 A1 offenbart Extrusions-Schaumstoffplatten auf Basis von Styrolpolymerisaten mit einer Dichte im Bereich von 20 bis 200 kg/m³, einer mittleren Zellgröße von 0,08 bis 0,25 mm und einer mittleren Zellwanddicke von 350 bis 1500 nm, verminderter Wärmeleitfähigkeit und hoher Druckfestigkeit, sowie ein Verfahren zur Herstellung dieser Schaumstoffplatten. Gemäß EP 1 661 939 A1 hat die Zellwanddicke eines extrudierten, IR-Absorber enthaltenden Schaumstoffes einen signifikanten Einfluss auf die Dämmeigenschaften und die mechanischen Eigenschaften. Die Verwendung von Additiven zur Zellvergrößerung wird nicht offenbart.

WO 02/081555 A2 offenbart ein Verfahren zur Herstellung von Schaumstoffplatten durch Extrudieren und Aufschäumen einer Mischung aus einem Styrolpolymerisat, 3 bis 15 Gew.-% eines Treibmittelgemisches und vorzugsweise 0,01 bis 10 Gew.-% Graphitpartikel, jeweils bezogen auf das Styrolpolymerisat. Als Treibmittel wird ein spezielles Gemisch aus Kohlendioxid, Ethanol, einem gesättigten oder ungesättigten, aliphatischen C₃-C₅-Kohlenwasserstoff und Wasser verwendet. Durch die Verwendung des Graphits wird gemäß WO 02/081555 ein sehr feinzelliger Schaumstoff erhalten, welcher nicht zu dicken Platten verarbeitet werden kann. Die Verwendung von Additiven zur Zellvergrößerung wird nicht offenbart.

EP 0 681 522 B1 offenbart ein Verfahren zur Herstellung eines Polymerschaumstoffes mit geschlossenen Zellen von erhöhter Größe auf Basis von Polymeren aus ethylenisch ungesättigten aromatischen Monomeren. Dazu wird ein aromatisches polymeres Material erhitzt, um eine Schmelze zu erhalten, ein Zellvergrößerungs-Reagenz wird zu der Schmelze gegeben, ein Treibmittel wird dem geschmolzenen polymeren Material hinzugefügt, und das so erhaltene schäumbare Gel wird bei einem niedrigeren Druck zu Schaumstoff verarbeitet. Gemäß EP 0 681 522 B1 sind die Zellvergrößerungs-Reagenzien ausgewählt aus der Gruppe bestehend aus Polyethylen- und Polypropylen-Glykolen mit einem Molekulargewicht von 1200 g/mol oder mehr, Salze von Aminofettsäurediestern, Aminoxiden, Imidazolinen, Hydroxyfettsäureamiden, n-Alkyltrimethylammoniumchloriden, ethoxylierten linearen Alkoholen und einer Vielzahl weiterer chemischer Verbindungen. Die Verwendung von Carbonsäureamiden zur Vergrößerung der in dem Schaumstoff befindlichen Zellen wird nicht offenbart.

EP-A-1 308 475 offenbart einen Schaumstoff aus Polyethylen mit sehr kleinen Zellen. Die Verwendung von wenigstens einem Carbonsäureamid als zellvergrößerndes Additiv in Schaumstoffen aus einem Styrol enthaltenden Polymer oder Copolymer wird in diesem Dokument nicht offenbart.

JP 2004 292489 A offenbart einen expandierbaren Partikel enthaltend Styrol-Harz, welcher durch Aufschäumen eines expandierbaren Partikels erhalten wird, wobei als Treibmittel organische Verbindungen eingesetzt werden.

WO 94/16876 A1 offenbart einen Schaumstoff mit vergrößerten Zellen und ein Verfahren zu dessen Herstellung. Dazu wird ein aromatisches Alkenyl-Polymer erhitzt, um ein geschmolzenes Polymer zu erhalten. In diese Schmelze werden Additive eingebracht, die die Zellgröße vergrößern und ausgewählt sind aus Polyethylenglycol und Polypropylenglycolsalzen von N-Talgbetaaminodipropionat, Aminoxiden, Imidazol, Fettsäurealkanolamiden mit 12 bis 18 Kohlenstoffatomen, N-Alkyltrimethylammoniumchlorid, ethoxylierten, linearen Alkoholen, Dioctylestersulfon-Bernsteinsäure-Natriumsalz, Polyoxy-Ethylensorbitan-Monopalmitat, Diglycollaurat, fluorchemischen, oberflächenaktiven Substanzen, Cocobetain oder wässrigen Emulsionen und Flüssigkeiten von Silizium-Verbindungen wie Dimethylpolysiloxan.

Im Stand der Technik wird der Zusatz stark nukleierender Additive, beispielsweise Graphit, Talkum oder Stickstoff, für die Herstellung von Schaumstoffen aus polymeren Materialien vorgeschlagen. Der Zusatz dieser stark nukleierenden Additive bewirkt bei der Herstellung dieser Schaumstoffe einen Schaumstoff mit sehr kleinen Zellen. Bei Zusatz dieser Additive in Mengen über 0,2 Gew.-%, bezogen auf das polymere Material, tritt eine deutliche Zellenverkleinerung auf, so dass mehr als 8 Zellen pro Millimeter Schaumstoff vorliegen. Diese deutliche Zellverkleinerung wirkt sich negativ auf das Expansionsverhalten des Schaums aus, so dass es nicht möglich ist, dicke Schaumstoffplatten mit einer Dicke von mehr als 60 mm in Anwesenheit dieser nukleierenden Additive direkt herzustellen. Im Rahmen der vorliegenden Erfindung bedeutet die Einheit "Zellen pro Millimeter", dass in einem erfindungsgemäß hergestellten Schaumstoff in jeder der drei Raumrichtungen pro Millimeter Strecke Schaumstoff die genannte Anzahl Zellen vorliegt.

Aufgabe der vorliegenden Erfindung ist es, ein Verfahren zur Herstellung von Schaumstoffen aus wenigstens einem polymeren Material bereitzustellen, durch welches Schaumstoffe erhalten werden, die große Zellen aufweisen, so dass eine Zellenanzahl von 8 pro Millimeter Schaumstoff nicht überschritten wird.

Diese Aufgabe wird gelöst durch ein Verfahren zur Herstellung von Schaumstoffen aus wenigstens einem polymeren Material umfassend die Schritte
(a) Erhitzen wenigstens eines polymeren Materials, um ein geschmolzenes polymeres Material zu erhalten, dem wenigstens ein Nukleierungsmittel zugesetzt wird,
(b) Einbringen eines Treibmittels ausgewählt aus Kohlendioxid, Stickstoff, Argon, Wasser, Luft und Helium in das geschmolzene polymere Material zur Ausbildung eines schäumbaren Gels und
(c) Aufschäumen des schäumbaren Gels, um eine geschäumte Struktur zu erhalten,
wobei in dem geschmolzenen polymeren Material wenigstens ein Carbonsäureamid ausgewählt aus der Gruppe bestehend aus Octadecansäureamid, cis-13-Docosensäureamid, 9-Octadecensäureamid, Docosansäureamid, Hexadecansäureamid und Mischungen davon vorliegt, wobei das polymere Material ein Polymer oder Copolymer enthaltend Styrol ist und mit einer mittleren Zellengröße von 0,1 bis 0,25 mm.

Mit Hilfe der erfindungsgemäß einsetzbaren Carbonsäureamide ist es möglich, die Zellzahl eines in deren Gegenwart hergestellten Schaumstoffes auf einen optimalen Wert einzustellen. Dieser Wert liegt bevorzugt bei kleiner oder gleich 8, besonders bevorzugt ist der Wert 8. Somit wird es durch den erfindungsgemäßen Einsatz der Carbonsäureamide möglich, eine deutliche Zellverkleinerung beim Aufschäumen zu vermeiden, so dass es möglich ist, dicke Schaumstoffplatten mit einer Dicke größer als 60 mm direkt herzustellen.

In dem erfindungsgemäßen Verfahren wird ein Schaumstoff aus wenigstens einem polymeren Material hergestellt, wobei das polymere Material ein Polymer oder Copolymer enthaltend Styrol ist.

Geeignete copolymerisierbare ethylenisch ungesättigte Monomere sind ausgewählt aus der Gruppe bestehend aus C₁₋₄-Alkenylsäuren, deren Estern, Amiden und Salzen und C₂₋₆-Diene. Besonders geeignete ethylenisch ungesättigte Monomere sind Acrylsäure, Methacrylsäure, Maleinsäure, Itaconsäure, Acrylonitril, Maleinsäureanhydrid, Acrylsäuremethylester, Acrylsäureethylester, Methacrylsäuremethylester, Vinylacetat, Butadien, Divinylbenzol und Butandioldiacrylat.

Bevorzugte polymere Materialien enthalten mehr als 95 Gew.-% Polystyrol, ein besonders bevorzugtes polymeres Material ist Polystyrol.

Die erfindungsgemäß einsetzbaren polymeren Materialien können nach dem Fachmann bekannten Verfahren hergestellt werden, beispielsweise radikalische, anionische oder kationische Polymerisation, in Substanz, Lösung, Dispersion oder Emulsion. Bevorzugt ist die radikalische Polymerisation.

Die in das erfindungsgemäße Verfahren einsetzbaren polymeren Materialien weisen im Allgemeinen gewichtsgemittelte Molekulargewichte von 100.000 bis 300.000 g/Mol, bevorzugt 120.000 bis 270.000 g/Mol, besonders bevorzugt 160.000 bis 240.000 g/Mol auf.

In Schritt (a) des erfindungsgemäßen Verfahrens wird das wenigstens eine polymere Material erhitzt, um ein geschmolzenes polymeres Material zu erhalten. Dazu ist es notwendig, das wenigstens eine polymere Material auf eine Temperatur oberhalb der Schmelz- bzw. Glasübergangstemperatur zu erhitzen. Geeignete Temperaturen betragen im Allgemeinen 50 bis 250 °C, bevorzugt 100 bis 220 °C, besonders bevorzugt 180 bis 220 °C. Wird als polymeres Material Polystyrol eingesetzt, so muss dieses polymere Material auf eine Temperatur von wenigstens 180 °C erhitzt werden, um eine Schmelze zu erhalten.

Das Erzeugen einer schäumbaren Polymerschmelze kann in dem Fachmann bekannten XPS-Extrudern durchgeführt werden, beispielsweise über einem Tandem-Aufbau aus Aufschmelzextruder (Primärextruder) und Kühlextruder (Sekundärextruder). Schritt (a) des erfindungsgemäßen Verfahrens kann kontinuierlich und diskontinuierlich durchgeführt werden, bevorzugt kontinuierlich, bei dem das Polymer im Primärextruder aufgeschmolzen wird und durch Zugabe eines Treibmittels (Schritt (b)) im Sekundärextruder ein schäumbares Gel bildet, welches an der Düse einen kontinuierlichen Schaum erzeugt.

Schritt (b) des erfindungsgemäßen Verfahrens umfasst das Einbringen eines Treibmittels in das in Schritt (a) geschmolzene polymere Material zur Ausbildung eines schäumbaren Gels.

Geeignete Treibmittel umfassen Kohlenstoffdioxid, Stickstoff, Argon, Wasser, Luft und Helium. Ein bevorzugtes Treibmittel ist eine Mischung von Kohlenstoffdioxid und Wasser.

Ein weiteres bevorzugtes Treibmittelgemisch umfasst 20 bis 95 Gew.-% Kohlendioxid, 5 bis 80 Gew.-% Wasser und 0 bis 75 Gew.-% eines Alkohols, beispielsweise Methanol oder Ethanol, eines Ketons oder Ethers.

Aus Umweltschutzgründen ist es wünschenswert, anorganische Treibmittel zu verwenden, wenn es möglich ist. Zwei besonders geeignete anorganische Treibmittel sind Kohlenstoffdioxid und Wasser.

Die Menge des Treibmittels, welche in das geschmolzene polymere Material eingebracht wird, um ein schäumbares Polymergel zu erhalten, beträgt 0,2 bis 5,0, bevorzugt von 0,5 bis 3,0 und besonders bevorzugt von 1,0 bis 2,50 mol/kg polymeres Material.

Das Treibmittel kann in das geschmolzene Polymermaterial durch jede dem Fachmann bekannte Methode eingebracht werden, beispielsweise mittels eines Extruders, eines Mixers oder eines Blenders. Das Treibmittel wird mit dem geschmolzenen Polymermaterial in einer bevorzugten Ausführungsform bei einem erhöhten Druck gemischt, wobei der Druck hoch genug ist, um im Wesentlichen eine Ausdehnung des geschmolzenen Polymermaterials zu vermeiden und um eine homogene Verteilung des Treibmittels in dem geschmolzenen Polymermaterial zu ermöglichen. Geeignete Drücke sind 100 bis 200 bar (absolut), bevorzugt 150 bis 170 bar (absolut). Die Temperatur in Schritt (b) des erfindungsgemäßen Verfahrens muss so gewählt sein, dass das polymere Material im geschmolzenen Zustand vorliegt, Daher wird Schritt (b) des erfindungsgemäßen Verfahrens im Allgemeinen bei 100 bis 180 °C, bevorzugt 110 bis 140 °C, und besonders bevorzugt 115 bis 125 °C durchgeführt. Schritt (b) kann kontinuierlich oder diskontinuierlich durchgeführt werden, bevorzugt kontinuierlich.

Dem geschmolzenen polymeren Material wird wenigstens ein Nukleierungsmittel zugesetzt. Als Nukleierungsmittel können feinteilige, anorganische Feststoffe wie Talkum, Metalloxide, Silikate oder Polyethylenwachse in Mengen von im Allgemeinen 0,1 bis 10 Gew.%, bevorzugt 0,1 bis 3 Gew.-%, besonders bevorzugt 1 bis 1,5 Gew.-%, bezogen auf das polymere Material, eingesetzt werden. Der mittlere Teilchendurchmesser des Nukleierungsmittels liegt in der Regel im Bereich von 0,01 bis 100 µm, bevorzugt 20 bis 60 µm. Ein besonders bevorzugtes Nukleierungsmittel ist Talkum. Das Nukleierungsmittel kann nach dem Fachmann bekannten Methoden der Polymerschmelze zugegeben werden, beispielsweise Talkum HP325, Luzenac Pharma. Die Zugabe kann in Schritt (a) und/oder (b) erfolgen.

Schritt (c) des erfindungsgemäßen Verfahrens umfasst das Aufschäumen des schäumbaren Gels, um eine geschäumte Struktur, einen Schaumstoff, zu erhalten.

In einer bevorzugten Ausführungsform wird dieses Aufschäumen durch Extrusion des Treibmittel-haltigen, geschmolzenen, polymeren Materials durch eine geeignete Vorrichtung, beispielsweise eine Düse, in einen Bereich niedrigeren Druckes als in Schritt (b) erhalten. Schritt (c) wird ebenfalls bei einer Temperatur durchgeführt, bei der das zu schäumende polymere Material in geschmolzenem Zustand vorliegt, im Allgemeinen 80 bis 125 °C, bevorzugt 115 bis 125 °C. Dadurch, dass das ein Treibmittel enthaltende, geschmolzene, polymere Material in Schritt (c) in einen Bereich überführt wird, in dem ein niedrigerer Druck herrscht, wird das Treibmittel in den gasförmigen Zustand überführt. Durch den großen Volumenanstieg wird das polymere Material ausgedehnt und aufgeschäumt.

Das erfindungsgemäße Verfahren ist dadurch gekennzeichnet, dass in dem geschmolzenen polymeren Material wenigstens ein Carbonsäureamid ausgewählt aus der Gruppe bestehend aus Octadecansäureamid (Stearinsäureamid, CAS-Nummer 124-26-5), cis-13-Docosensäureamid (Erucasäureamid, CAS-Nummer 112-84-5), 9-Octadecensäureamid (Oleylsäureamid, CAS-Nummer 301-02-0), Docosansäureamid (Behensäureamid), Hexadecansäureamid (Palmitinsäureamid) und Mischungen davon, vorliegt.

Die erfindungsgemäß einsetzbaren Carbonsäureamide können nach dem Fachmann bekannten Verfahren erhalten werden, beispielsweise durch, gegebenenfalls katalysierte, Umsetzung der entsprechenden Carbonsäuren mit den entsprechenden Aminen oder Ammoniak. Die Verbindungen sind auch kommerziell erhältlich.

Das wenigstens eine Carbonsäureamid wird in dem erfindungsgemäßen Verfahren im Algemeinen in einer Menge von 0,1 bis 10 Gew.-%, bevorzugt 0,5 bis 5 Gew.-%, besonders bevorzugt 0,8 bis 3 Gew.-%, beispielsweise 1 oder 2 Gew.%, jeweils bezogen auf das polymere Material, eingesetzt. Das wenigstens eine Carbonsäureamid kann dem polymeren Material in den Schritten (a) oder (b) des erfindungsgemäßen Verfahrens zugesetzt werden. Geeignete Vorgehensweisen sind dem Fachmann bekannt, und umfassen eine Dosierung des Carbonsäureamids in die Aufschmelzzone des Extruders zum Polymer.

Der durch das erfindungsgemäße Verfahren erhältliche Schaumstoff zeichnet sich durch eine erhöhte Größe der Zellen aus. Im Allgemeinen liegen in dem erfindungsgemäß hergestellten Schaumstoff 4 bis 10, bevorzugt 5 bis 9, besonders bevorzugt 8 Zellen pro mm Schaumstoff vor. Besonders bevorzugt wird durch das erfindungsgemäße Verfahren ein Schaumstoff erhalten, der höchsten 8 Zellen pro mm Schaumstoff aufweist daraus ergibt sich eine mittlere Zellengröße von 0,1 bis 0,25 mm, bevorzugt 0,11 bis 0,2 mm, besonders bevorzugt 0,125 mm. Die mittlere Zellengröße kann durch dem Fachmann bekannte Verfahren gemessen werden, beispielsweise Rasterelektronenmikroskopie. Die erwähnte erhöhte Zellgröße ist auf den Einsatz der speziellen Carbonsäureamide in dem erfindungsgemäßen Verfahren zurückzuführen. Durch die erfindungsgemäß eingesetzten Carbonsäureamide kann das polymere Material besonders gut aufgeschäumt werden, so dass beispielsweise Schaumstoffplatten mit Dicken von größer 60 mm direkt erhältlich sind.

In dem erfindungsgemäßen Verfahren ist es möglich, gegebenenfalls weitere Additive in den Schaumstoff einzubringen, beispielsweise anorganische Füllmittel, Pigmente, Antioxidantien, Säurefänger, UV-Absorber, Flammschutzmittel, Bearbeitungshilfsmittel und Extrusionshilfsmittel. Diese weiteren Additive sind im Allgemeinen in einer Menge von 0,5 bis 5 Gew.-%, bevorzugt 2 Gew.-%, jeweils bezogen auf das polymere Material, anwesend. Diese Additive können bereits vor Schritt (a) in dem polymeren Material vorliegen, oder sie werden in Schritt (a) und/oder (b) dem polymeren Material zugegeben.

Der durch das vorliegende Verfahren hergestellte Schaumstoff kann dazu verwendet werden, eine Oberfläche zu isolieren, in dem eine isolierende Schicht aus dem erfindungsgemäß hergestellten Schaumstoff auf diese Oberfläche aufgebracht wird. Dies kann in allen bekannten Isolierungsanwendungen durchgeführt werden, beispielsweise an Dächern, Gebäuden und Haushaltsgeräten, beispielsweise Kühlschränken.

Der erfindungsgemäß hergestellte Schaumstoff kann in eine Vielzahl von verschiedenen geschäumten Teilen geformt werden, beispielsweise als einzelne kleine Teile für Anwendungen beispielsweise in Verpackungen, oder in massive Werkstücke geeigneter Größe, bevorzugt mit einer Dicke von größer 60 mm. Der durch das erfindungsgemäße Verfahren erhaltene Schaumstoff hat im Allgemeinen eine Dichte von 10 bis 150, bevorzugt von 10 bis 70, ganz besonders bevorzugt 30 bis 50 kg/m³.

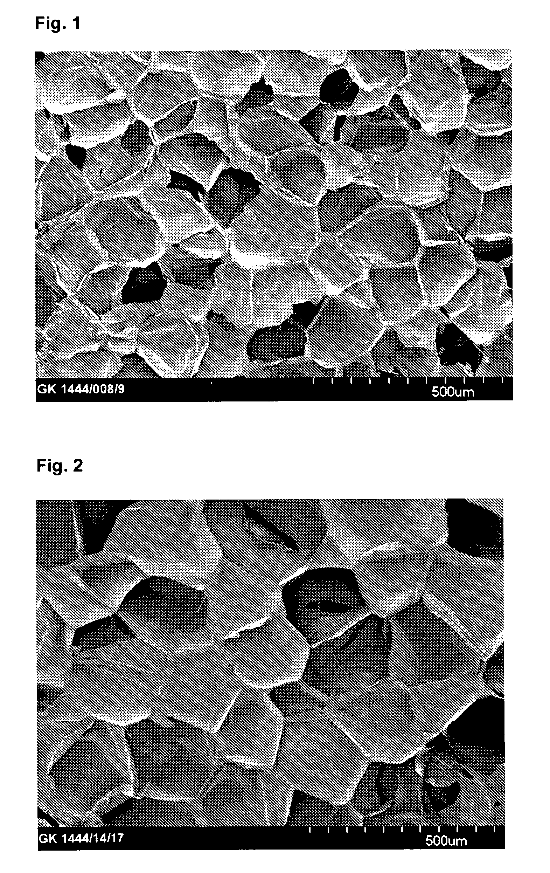

Figur 1 zeigt eine rasterelektronenmikroskopische Aufnahme von Zellen eines Polystyrol-Schaumstoffes, der ohne Carbonsäureamid hergestellt worden ist, mit 10 Zellen pro mm.

Figur 2 zeigt eine Rasterelektronenmikroskopische Aufnahme von Zellen eines Polystyrol-Schaumstoffes, der mit 1 Gew.-% Palmitinsäureamid hergestellt worden ist. Dieser erfindungsgemäße Schaumstoff weist eine Zellenzahl von 6 Zellen/mm auf.

### Beispiele:

### Erfindungsgemäße Beispiele:

Es wird ein Polystyrol-Schaumstoff mit dem erfindungsgemäßen Verfahren hergestellt. Dazu wird ein Polystyrol-Polymer mit einem Molekulargewicht von 220.000 g/mol und bei einer Temperatur von 200 °C in einem XPS-Extruder geschmolzen. Zu dieser Schmelze wird Talkum als nukleierendes Additiv hinzugegeben. Als Treibmittel wird Kohlendioxid verwendet. Das Aufschäumen wird durch Einsatz eines Zweischneckenextruders ZSK 25 bei einer Temperatur von 120 °C und einem Druck von 160 bar (absolut) auf Seite der Schmelze und einem Druck von 1 bar (absolut) auf der Seite des Schaumstoffs durchgeführt. In Tabelle 1 sind verschiedene Experimente dargestellt, welche sich durch die eingesetzten Carbonsäureamide unterscheiden. Experiment 1 wird als Vergleich ohne Carbonsäureamid durchgeführt.

**Tabelle 1: Zellzahlreduzierung verschiedener erfindungsgemäßer Carbonsäureamide, jeweils 1 Gew.-%, bei jeweils 0,2 Gew.-% Talkum als nukleierendem Additiv.**

| **Experiment** | **Carbonsäureamid** | **Zellen [1/mm]** | **Dichte [kg/m³]** |
|---|---|---|---|
| **1** | - | 10 | 40.8 |
| **3** | Palmitinsäureamid | 6 | 41.2 |
| **4** | Erucasäureamid | 6 | 38.7 |
| **5** | Behensäureamid | 7 | 41.0 |
| **6** | Stearinsäureamid | 6 | 41.0 |
| **7** | Oleylsäureamid | 5 | 43.5 |

Alle in Tabelle 1 abgebildeten Carbonsäureamide zeigen eine signifikante Erniedrigung der Zellenzahl.

In Tabelle 2 ist die Zellzahlreduzierung verschiedener Carbonsäureamide, bei verschiedenen Talkumkonzentrationen dargestellt. Experiment 8 wurde als Vergleich ohne Carbonsäureamid durchgeführt.

**Tabelle 2: Zellzahlreduzierung verschiedener Carbonsäureamide, jeweils 2 Gew.-%, bei verschiedenen Talkumkonzentrationen**

| **Experiment** | **Carbonsäureamid** | **Menge Talkum [Gew.-%]** | | | |
|---|---|---|---|---|---|
| | | 0,2 | 0,4 | 0,8 | 1,6 |
| | | **Zellen [1/mm]** | | | |
| **8** | - | 9,2 | 11,2 | 11,4 | 11,3 |
| **9** | Palmitinsäureamid | 6,3 | 6,5 | 7,8 | 9,2 |
| **10** | Erucasäureamid | 5,6 | 5,9 | 7,5 | 7,7 |

Die in Tabelle 2 abgebildeten Carbonsäureamide zeigen bei verschiedenen Nukleierungsmittelkonzentration eine signifikante Erniedrigung der Zellenanzahl.

### Vergleichsbeispiele:

Es wird eine Polystyrol-Schaumstoff wie in den erfindunsgemäßen Beispielen hergestellt. Im Unterschied zu den erfindungsgemäßen Beispielen wird als Denukleierungsmittel anstelle der Carbonsäureamide ein Polyethylenglykol mit einer Molekularmasse von 200 g/mol eingesetzt. Talkum liegt in einer Konzentration von 0,2 Gew.-% vor. Tabelle 3 zeigt die Ergebnisse:

**Tabelle 3: Zellzahlreduzierung bei Einsatz von Polyethylenglykol mit M = 200 g/mol bei einer Konzentration von 2 Gew.-%**

| **Additiv** | **Dichte [g/L]** | **Zellen [1/mm]** |
|---|---|---|
| Nullprobe (ohne Additiv) | 57 | 8,8 |
| Polyethylenglykol, M = 200 g/mol | 52,6 | 8,2 |

Dieses Vergleichsbeispiel zeigt, dass Polyethylenglykole eine deutlich schlechtere Zellzahlreduzierung (Vergrößerung der Zellen) und somit eine schlechtere denukleierende Wirkung als die erfindungsgemäß eingesetzten Carbonsäureamide, d.h. die Carbonsäureamide wirken stärker denukleierend und sind besser geeignet.

## Patentansprüche

1. Verfahren zur Herstellung von Schaumstoffen aus wenigstens einem polymeren Material umfassend die Schritte
(a) Erhitzen wenigstens eines polymeren Materials, um ein geschmolzenes polymeres Material zu erhalten, dem wenigstens ein Nukleierungsmittel zugesetzt wird,
(b) Einbringen eines Treibmittels ausgewählt aus Kohlendioxid, Stickstoff, Argon, Wasser, Luft und Helium in das geschmolzene polymere Material zur Ausbildung eines schäumbaren Gels und
(c) Aufschäumen des schäumbaren Gels, um eine geschäumte Struktur zu erhalten,
**dadurch gekennzeichnet, dass** in dem geschmolzenen polymeren Material wenigstens ein Carbonsäureamid ausgewählt aus der Gruppe bestehend aus Octadecansäureamid, cis-13-Docosensäureamid, 9-Octadecensäureamid, Docosansäureamid, Hexadecansäureamid und Mischungen davon vorliegt, wobei das polymere Material ein Polymer oder Copolymer enthaltend Styrol ist und mit einer mittleren Zellengröße von 0,1 bis 0,25 mm.

## Claims

1. A process for producing foams comprising at least one polymeric material, which comprises the steps
(a) heating of at least one polymeric material to obtain a molten polymeric material to which at least one nucleating agent is added,
(b) introduction of a blowing agent selected from among carbon dioxide, nitrogen, argon, water, air and helium into the molten polymeric material to form a foamable gel and
(c) foaming of the foamable gel to obtain a foamed structure,
wherein at least one carboxamide selected from the group consisting of octadecanamide, cis-13-docosenamide, 9-octadecenamide, docosanamide, hexadecanamide and mixtures thereof is present in the molten polymeric material, where the polymeric material is a polymer or copolymer comprising styrene and has an average cell size of from 0.1 to 0.25 mm.

## Revendications

1. Procédé de fabrication de mousses à partir d'au moins un matériau polymère, comprenant les étapes suivantes :
(a) le chauffage d'au moins un matériau polymère pour obtenir une matériau polymère fondu, auquel au moins un agent de nucléation est ajouté,
(b) l'introduction d'un agent gonflant choisi parmi le dioxyde de carbone, l'azote, l'argon, l'eau, l'air et l'hélium dans le matériau polymère fondu pour former un gel moussable, et
(c) le moussage du gel moussable pour obtenir une structure moussée,
**caractérise en ce qu'**au moins un amide d'acide carboxylique choisi dans le groupe constitué par l'amide de l'acide octadécanoïque, l'amide de l'acide cis-13-docosénoïque, l'amide de l'acide 9-octadécénoïque, l'amide de l'acide docosanoïque, l'amide de l'acide hexadécanoïque et leurs mélanges est présent dans le matériau polymère polymère étant un polymère ou copolymère contenant du styrène et ayant une taille de cellule moyenne de 0,1 à 0,25 mm.
